# EUROPEAN PATENT SPECIFICATION

(11) **EP 2 181 148 B1**
(45) Date of publication and mention of the grant of the patent: **15.02.2017**
(21) Application number: 08807352.3
(22) Date of filing: 18.08.2008
(51) Int. Cl.: C08K 3/24, C08K 3/34, C08K 7/02, C08J 3/20

(54) **HIGH DIELECTRIC CONSTANT THERMOPLASTIC COMPOSITION, METHODS OF MANUFACTURE THEREOF AND ARTICLES COMPRISING THE SAME**
HOCH DIELEKTRISCHE, KONSTANTE THERMOPLASTISCHE ZUSAMMENSETZUNG, HERSTELLUNGSVERFAHREN DAFÜR UND ARTIKEL DAMIT
COMPOSITION THERMOPLASTIQUE À CONSTANTE DIÉLECTRIQUE ÉLEVÉE, SES PROCÉDÉS DE FABRICATION ET ARTICLES LA COMPRENANT

(30) Priority: 20.08.2007 US 841466
(43) Date of publication of application: 05.05.2010
(73) Proprietor: SABIC Global Technologies B.V., 4612 PX Bergen op Zoom (NL)
(72) Inventor: MENG, Jiru, Shanghai 201203 (CN); HUANG, Xin, Shanghai 200336 (CN); XIANGPING, David, Shanghai 1050 (CN); LI, Gang, Shanghai 201203 (CN); MENGGE, Liu, Shanghai 201203 (CN)
(74) Representative: Modiano, Micaela Nadia
(86) International application number: PCT/IB2008/053309
(87) International publication number: WO 2009/024920

(56) References cited:
- WO-A-02/088225
- WO-A-02/100931
- DATABASE WPI Week 198817 Thomson Scientific, London, GB; AN 1988-116655 XP002517706 & JP 63 063728 A (TOSHIBA KK) 22 March 1988 (1988-03-22)

## Description

### BACKGROUND

This disclosure relates to a high dielectric constant thermoplastic composition, methods of manufacture thereof and articles comprising the same.

In the electronics industry as well as in the automotive industry, there is a need for thermoplastic compositions that have high dielectric constants greater than or equal to about 4. In addition it is desirable for such thermoplastic composites to be easily processable and to possess suitable mechanical properties such as ductility and impact resistance.

However, in order to have a composite with a high dielectric constant, it is generally desirable to incorporate a large volume fraction of dielectric material, such as, for example, a ceramic powder into a thermoplastic polymer. The large volume fractions of dielectric material in the thermoplastic polymer generally produce processing problems such as extruder seizure, which causes the extruder screw to stop rotating. In addition, the polymer degrades because of the high shear encountered during processing. The degradation of the polymer also causes degradation of mechanical properties of the composition.

It is therefore desirable to manufacture a thermoplastic composition that has a high dielectric constant and that has advantageous mechanical properties and processing characteristics.

### SUMMARY

Disclosed herein is a composition comprising a thermoplastic polymer; 10 to 60 weight percent of a dielectric filler having a dielectric constant greater than or equal to 25 when measured at 900 megahertz, wherein the dielectric filler comprises a ceramic filler; and 1 to 10 weight percent of a fibrous composition, wherein the fibrous composition comprises metal fibers, metal coated fibers, carbon fibers, or a combination comprising at least one of the foregoing fibers, the weight percent being based on the total weight of the composition.

Disclosed herein too is a method comprising melt blending a composition comprising a thermoplastic polymer; 10 to 60 weight percent of a dielectric filler having a dielectric constant greater than or equal to 25 when measured at 900 megahertz; wherein the dielectric filler comprises a ceramic filler; and 1 to 10 weight percent of a fibrous composition, wherein the fibrous composition comprises metal fibers, metal coated fibers, carbon fibers, or a combination comprising at least one of the foregoing fibers, the weight percent being based on the total weight of the composition.

Disclosed herein too are articles manufactured from the aforementioned composition using the aforementioned method.

### BRIEF DESCRIPTION OF FIGURES

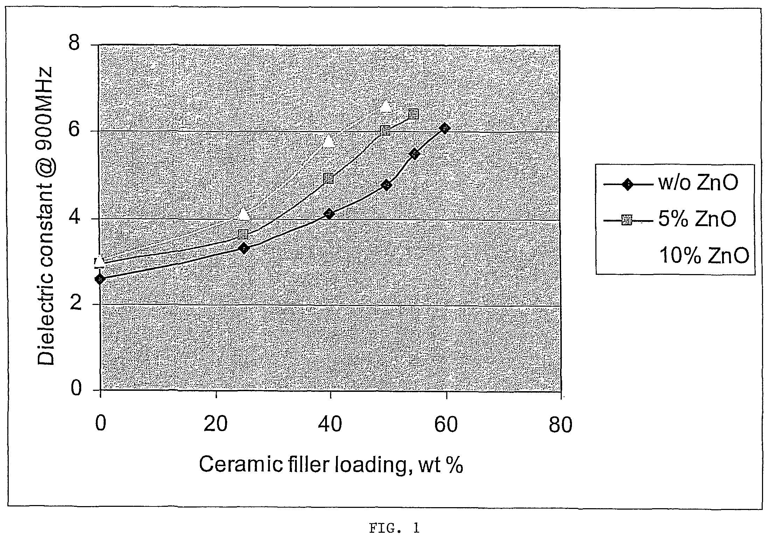

The Figure is a graph depicting the dielectric constant versus the ceramic filler loading in weight percent, when zinc oxide whiskers are added to the composition.

### DETAILED DESCRIPTION

The present invention may be understood more readily by reference to the following detailed description of preferred embodiments of the invention and the examples included herein. In this specification, and in the claims that follow, reference will be made to a number of terms that shall be defined to have the following meanings.

The use of the terms "a" and "an" and "the" and similar references in the context of describing the invention (especially in the context of the following claims) are to be construed to cover both the singular and the plural, unless otherwise indicated herein or clearly contradicted by context.

The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

Disclosed herein is a composition that comprises a thermoplastic polymer, a dielectric filler and an fibrous composition. The presence of the fibrous composition permits a reduction in the amount of the dielectric filler when compared with comparative compositions that have approximately the same dielectric constant and does not contain the fibrous composition. The reduction in the amount of the dielectric filler improves processing characteristics of the composition by reducing the melt viscosity. The specific gravity of the composition is also reduced when compared with compositions that have approximately the same dielectric constant and does not contain the fibrous composition. The composition also has improved mechanical properties such as increased ductility when compared with comparative compositions that have approximately the same dielectric constant and does not contain the fibrous composition.

The thermoplastic polymer may also be a blend of polymers, copolymers, terpolymers, or combinations comprising at least one of the foregoing thermoplastic polymers. The thermoplastic polymer can also be an oligomer, a homopolymer, a copolymer, a block copolymer, an alternating block copolymer, a random polymer, a random copolymer, a random block copolymer, a graft copolymer, a star block copolymer, a dendrimer, or the like, or a combination comprising at last one of the foregoing thermoplastic polymers.

Examples of the thermoplastic polymers are polyacetals, polyolefins, polyacrylics, polycarbonates, polystyrenes, polyesters, polyamides, polyamideimides, polyarylates, polyarylsulfones, polyethersulfones, polyphenylene sulfides, polyvinyl chlorides, polysulfones, polyimides, polyetherimides, polytetrafluoroethylenes, polyetherketones, polyether etherketones, polyether ketone ketones, polybenzoxazoles, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazanes, styrene acrylonitrile, acrylonitrile-butadiene-styrene (ABS), polyethylene terephthalate, polybutylene terephthalate, polyurethane, ethylene propylene diene rubber (EPR), polytetrafluoroethylene, fluorinated ethylene propylene, perfluoroalkoxyethylene, polychlorotrifluoroethylene, polyvinylidene fluoride, or the like, or a combination comprising at least one of the foregoing thermoplastic polymers.

Examples of blends of thermoplastic polymers include acrylonitrile-butadiene-styrene/nylon, polycarbonate/acrylonitrile-butadiene-styrene, acrylonitrile butadiene styrene/polyvinyl chloride, polyphenylene ether/polystyrene, polyphenylene ether/nylon, polysulfone/acrylonitrile-butadiene-styrene, polycarbonate/thermoplastic urethane, polycarbonate/polyethylene terephthalate, polycarbonate/polybutylene terephthalate, thermoplastic elastomer alloys, nylon/elastomers, polyester/elastomers, polyethylene terephthalate/polybutylene terephthalate, acetal/elastomer, styrene-maleicanhydride/acrylonitrile-butadiene-styrene, polyether etherketone/polyethersulfone, polyether etherketone/polyetherimide polyethylene/nylon, polyethylene/polyacetal, or the like.

In one embodiment, the composition comprises the thermoplastic polymer in an amount of about 25 weight percent (wt%) to about 95 wt%, specifically about 35 to about 90 wt%, and more specifically about 45 to about 80 wt%, based upon the total weight of the composition.

In one embodiment, the dielectric filler comprises a ceramic filler. The ceramic filler can comprise nanoparticles (having at least one dimension less than or equal to about 100 nanometers) or can comprise particles that have at least one dimension that is greater than 100 nanometers. The ceramic filler is generally particulate in nature having average particle sizes that are about 10 nanometers to about 100 micrometers, specifically about 100 nanometers to about 10 micrometers, and more specifically about 1,000 nanometers to about 5,000 nanometers.

It is desirable for the dielectric filler to have a dielectric constant of greater than or equal to about 25 when measured at 900 MHz. In one embodiment, the ceramic fillers can be particulate in nature, as opposed to being fibrous, and to have an average aspect ratio of about 1. In another embodiment, the ceramic fillers are fibrous having an aspect ratio of greater than or equal to about 5, specifically greater than or equal to about 10, and more specifically greater than or equal to about 100. In an exemplary embodiment, it is desirable for the ceramic fillers to be fibrous.

When the ceramic fillers in the dielectric filler are fibrous, it is desirable for the fillers to exist in the form of whiskers, needles, rods, nanorods, tubes, strands, elongated platelets, lamellar platelets, ellipsoids, micro-fibers, nanofibers and nanotubes, elongated fullerenes, vapor grown carbon fibers, or the like, or a combination comprising at least one of the foregoing fibers.

The particles of ceramic filler, as commercially available, may exist in the form of aggregates or agglomerates prior to or after incorporation into the composition. An aggregate comprises more than one particle in physical contact with one another, while an agglomerate comprises more than one aggregate in physical contact with one another.

The ceramic filler can comprise inorganic oxides, metal oxides, silicates, borides, carbides, nitrides, perovskites and perovskites derivatives, or the like, or a combination comprising at least one of the foregoing.

Examples of inorganic oxides include calcium oxide, silicon dioxide, or the like, or a combination comprising at least one of the foregoing inorganic oxides. In one embodiment, the ceramic filler comprises metal oxides of alkali metals, alkaline earth metals, transition metals, metalloids, poor metals, or the like, or a combination comprising at least one of the foregoing. Examples of metal oxides include zirconates, titanates, aluminates, stannates, niobates, tantalates, rare earth oxides or the like, or a combination comprising at least one of the foregoing.

Examples of metal oxides are cerium oxide, magnesium oxide, titanium oxide, zinc oxide, copper oxide, cerium oxide, niobium oxide, tantalum oxide, yttrium oxide, zirconium oxide, aluminum oxide (e.g., alumina and/or fumed alumina), CaTiO₃ MgZrSrTiO₆, MgTiO₃, MgAl₂O₄, BaZrO₃, BaSnO₃, BaNb₂O₆, BaTa₂O₆, WO₃, MnO₂, SrZrO₃, SnTiO₄, ZrTiO₄, CaZrO₃, CaSnO₃, CaWO₄, MgTa₂O₆, MgZrO₃, La₂O₃, CaZrO₃, MgSnO₃ MgNb₂O₆, SrNb₂O₆, MgTa₂O₆, Ta₂O₃, or the like, or a combination comprising at least one of the foregoing metal oxides.

Examples of silicates are Na₂SiO₃, LiAlSiO₄, Li₄SiO₄, BaTiSi₃O₉, Al₂Si₂O₇, ZrSiO₄, KAlSi₃O₈, NaAlSi₃O₈, CaAl₂Si₂O₈, CaMgSi₂O₆ Zn₂SiO₄, or the like, or a combination comprising at least one of the foregoing silicates.

Examples of borides are lanthanum boride (LaB₆), cerium boride (CeB₆), strontium boride (SrB₆), aluminum boride, calcium boride (CaB₆), titanium boride (TiB₂), zirconium boride (ZrB₂), vanadium boride (VB₂), tantalum boride (TaB₂), chromium borides (CrB and CrB₂), molybdenum borides (MoB₂, Mo₂B₅ and MoB), tungsten boride (W₂B₅), or the like, or a combination comprising at least one of the foregoing borides.

Examples of carbides are silicon carbide, tungsten carbide, tantalum carbide, iron carbide, titanium carbide, or the like, or a combination comprising at least one of the foregoing carbides.

Examples of nitrides include silicon nitride, boron nitride, titanium nitride, aluminum nitride, molybdenum nitride, or the like, or a combination comprising at least one of the foregoing nitrides.

Examples of perovskites and perovskite derivatives include barium titanate (BaTiO₃), strontium titanate (SrTiO₃), barium strontium titanate, strontium-doped lanthanum manganate, lanthanum aluminum oxides (LaAlO₃), calcium copper titanate (CaCu₃Ti₄O₁₂), cadmium copper titanate (CdCu₃Ti₄O₁₂), Ca₁₋ₓLaₓMnO₃, (Li, Ti) doped NiO, lanthanum strontium copper oxides (LSCO), yttrium barium copper oxides (YBa₂Cu₃O₇), lead zirconate titanate, lanthanum-modified lead zirconate titanate, or the like, or a combination comprising at least one of the foregoing perovskites and perovskite derivatives.

As noted above, the ceramic fillers may comprise nanoparticles. Commercially available examples of nanoparticles that can be used in the composition are NANOACTIVE^{™} calcium oxide, NANOACTIVE^{™} calcium oxide plus, NANOACTIVE^{™} cerium oxide, NANOACTIVE^{™} magnesium oxide, NANOACTIVE^{™} magnesium oxide plus, NANOACTIVE^{™} titanium oxide, NANOACTIVE^{™} zinc oxide, NANOACTIVE^{™} silicon oxide, NANOACTIVE^{™} copper oxide, NANOACTIVE^{™} aluminum oxide, NANOACTIVE^{™} aluminum oxide plus, all commercially available from NanoScale Materials Incorporated.

The dielectric filler can be added in amounts of 10 to about 60 wt%, specifically about 25 to about 55 wt%, and more specifically about 30 to about 50 wt%, based upon the total weight of the composition.

The fibrous composition can comprise electrically conducting fibers or electrically insulating fibers. An electrically insulating material is one that has a bulk or volume electrical resistivity that is greater than or equal to about 10¹² ohm-cm. An electrically conducting material is one that has a bulk or volume electrical resistivity that is less than 10¹² ohm-cm. As used herein, the fibers may exist in the form of whiskers, needles, rods, nanorods, tubes, strands, elongated platelets, lamellar platelets, ellipsoids, micro-fibers, nanofibers and nanotubes, elongated fullerenes, vapor grown carbon fibers, or the like, or a combination comprising at least one of the foregoing fibers. It is generally desirable for the electrically insulating fibers to have an average aspect ratio of greater than or equal to about 1. Where such electrically insulating fibers exist in aggregate form, an aggregate having an average aspect ratio greater than 1 will also suffice.

It is desirable for the fibrous composition to have an average aspect ratio of greater than or equal to about 1, specifically an average aspect ratio of greater than or equal to about 5, more specifically an average aspect ratio of greater than or equal to about 10, and even more specifically an average aspect ratio of greater than or equal to about 20, prior to incorporation into the composition.

Examples of electrically conducting fibers are metal fibers, metal coated fibers, carbon fibers, or the like, or a combination comprising at least one of the foregoing electrically conducting fibers. The metal fibers can comprise stainless steel fibers, aluminum fibers, copper fibers, nickel fibers, aluminum alloy fibers, copper alloy fibers, or the like, or a combination comprising at least one of the foregoing fibers. The metal fibers are generally in the form of bundles. An exemplary metal fiber is a stainless steel fiber present in a bundle of about 10,000 fibers commercially available from Bekaert. The bundle may be coated with a layer (a jacket) of organic polymer.

Metal coated fibers generally comprise electrically insulating fibers that are coated with an electrically conducting metal. Electrically conducting fibers may also be coated with a metallic layer. A list of electrically insulating fibers is provided below. These electrically insulating fibers may be coated with metals such as copper, aluminum, iron, nickel, cobalt, tin, zinc, gold, silver, platinum, palladium, or the like, or a combination comprising at least one of the foregoing metals.

Examples of suitable electrically insulating fibers include short inorganic fibers, including processed mineral fibers such as those derived from blends comprising at least one of aluminum silicates, aluminum oxides, magnesium oxides, and calcium sulfate hemihydrate, boron fibers, ceramic fibers such as silicon carbide, and fibers from mixed oxides of aluminum, boron and silicon sold under the trade name NEXTEL® by 3M Co., St. Paul, MN, USA. Also included among the electrically insulating fibers are single crystal fibers or "whiskers" including silicon carbide, alumina, boron carbide, or the like, or a combination comprising at least one of the foregoing electrically insulating fibers. Electrically insulating fibers such as glass fibers, basalt fibers, including textile glass fibers and quartz may also be coated with metals and used in the composition.

The electrically insulating fibers may be provided in the form of monofilament or multifilament fibers and can be used either alone or in combination with other types of fiber, through, for example, co-weaving or core/sheath, side-by-side, orange-type or matrix and fibril constructions. Exemplary cowoven structures include glass fiber-aromatic polyimide (aramid) fiber and aromatic polyimide fiberglass fiber. Fibers may be supplied in the form of, for example, rovings, woven fibrous reinforcements, such as 0-90 degree fabrics, non-woven fibrous reinforcements such as continuous strand mat, chopped strand mat, tissues, papers and felts and 3-dimensionally woven reinforcements, preforms and braids.

Exemplary electrically insulating fibers are glass fibers. Useful glass fibers can be formed from any type of fiberizable glass composition and include those prepared from commercial fiberizable glass compositions known as "E-glass," "A-glass," "C-glass," "D-glass," "R-glass," "S-glass," as well as E-glass derivatives that are fluorine-free and/or boron-free. Most reinforcement mats comprise glass fibers formed from E-glass and are included in the fibrous composition.

Commercially available glass fibers generally having nominal filament diameters of about 4.0 to about 35.0 micrometers may be coated with a metal and used in the fibrous composition. The filaments are made by standard processes, e.g., by steam or air blowing, flame blowing, and mechanical pulling. The preferred filaments for plastics reinforcement are made by mechanical pulling. Use of non-round fiber cross section is also possible.

The glass fibers may be sized or unsized. Sized glass fibers are generally coated on at least a portion of their surfaces with a sizing composition selected for compatibility with the thermoplastic polymer. The sizing composition facilitates wet-out and wet-through of the thermoplastic polymer upon the fiber strands and assists in attaining desired physical properties in the composition.

The amount of sizing employed is generally that amount which is sufficient to bind the glass filaments into a continuous strand and ranges from about 0.1 to about 5 wt%, specifically from about 0.1 to 2 wt% based on the weight of the glass fibers.

The fibrous composition may also comprise carbon fibers that are commercially produced by the pyrolysis of organic precursors in fibrous form, including phenolics, polyacrylonitrile (PAN) or pitch. The carbon fibers may also be sized with a sizing agent if desired.

In one embodiment, the fibrous composition comprises fibers having average diameters of about 10 nanometers to about 40 micrometers, specifically about 20 nanometers to about 20 micrometers, more specifically about 40 nanometers to about 15 micrometers. An exemplary average diameter for carbon and metal fibers is 9 micrometers.

In another embodiment, the fibrous composition comprises fibers having average lengths of about 20 nanometers to about 20 millimeters prior to processing, specifically about 30 nanometers to about 11 millimeters prior to processing, more specifically about 50 nanometers to about 10 millimeters prior to processing.

In another embodiment, the composition comprises fibers having average lengths of about 10 nanometers to about 3 millimeters after undergoing processing in an extruder, specifically about 30 nanometers to about 1.5 millimeters after undergoing processing in an extruder, more specifically about 50 nanometers to about 1 millimeters after undergoing processing in an extruder and/or an injection molding machine.

In yet another embodiment, the fibrous composition is used in an amount of about 1 to about 10 wt%, specifically about 2 to about 9 wt%, more specifically about 3 to about 8 wt%, based on the total weight of the composition.

In one embodiment, in one method of manufacturing the composition, the thermoplastic polymer, together with the dielectric filler and the fibrous composition are blended under conditions of shear and temperature effective to produce a homogeneous composition that has a dielectric constant greater than or equal to about 2. An exemplary form of blending involves melt blending, which comprises melting the thermoplastic polymer and dispersing the dielectric filler and the fibrous composition into the molten thermoplastic polymer. Dry blending of the aforementioned ingredients may be conducted prior to the melt blending. The melt blending may result in the formation of an intermediate product such as, for example, pellets or briquettes that can be subsequently manufactured into an article or it may result in the direct formation of articles via a molding process.

Melt blending of the composition involves the use of shear force, extensional force, compressive force, ultrasonic energy, electromagnetic energy, thermal energy or combinations comprising at least one of the foregoing forces or forms of energy, and is conducted in processing equipment wherein the aforementioned forces or forms of energy are exerted by a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, or combinations comprising at least one of the foregoing.

Melt blending involving the aforementioned forces may be conducted in machines such as single or multiple screw extruders, Buss kneaders, Henschel mixers, helicones, Ross mixers, Banbury, roll mills, molding machines such as injection molding machines, vacuum forming machines, blow molding machines, or the like, or a combination comprising at least one of the foregoing machines.

In one embodiment, the compositions may be prepared by pre-combining (dry-blending) the thermoplastic polymer, the dielectric filler, and the fibrous composition prior to being fed into a melt blending device, although such pre-combining may not always be desired. The pre-combining may be carried out in a mixer such as, for example, a drum mixer, ribbon mixer, vertical spiral mixer, Muller mixer, sigma mixer, chaotic mixer, static mixer, and the like. Pre-combining is generally carried out at room temperature.

A melt blend is one where at least a portion of the thermoplastic polymer has reached a temperature greater than or equal to about its melting temperature, if the thermoplastic polymer is a semi-crystalline organic polymer, or its flow point (e.g., the glass transition temperature) if the thermoplastic polymer is an amorphous organic polymer during the blending process. A dry blend is one where the entire mass of the thermoplastic polymer is at a temperature less than or equal to about its melting temperature, or at a temperature less than or equal to its flow point if the thermoplastic polymer is an amorphous polymer and wherein the thermoplastic polymer is substantially free of any liquid-like fluid during the blending process.

In one embodiment, the thermoplastic polymer, the dielectric filler and the fibrous composition are added to an extruder and undergo melt blending in the extruder. The extrudate is collected and subjected to molding. The aforementioned ingredients may be added to the throat of the extruder or some of them may be added downstream.

In one embodiment, the dielectric filler and/or the fibrous composition can be added to the extruder in the form of a masterbatch. The respective masterbatches can be added to the extruder at the throat or downstream if desired. In an exemplary embodiment, the fibrous composition can be added downstream of the throat, specifically just prior to the die of the extruder.

The extrudate is generally collected from the extruder in the form of pellets. The pellets are then molded to form a desired article in an injection molding machine, a blow molding machine, a vacuum forming device, or the like.

The use of the fibrous composition in conjunction with the dielectric filler is advantageous in that that amount of the dielectric filler can be reduced while maintaining the dielectric constant of the composition. In one embodiment, for a given dielectric constant, the amount of the dielectric filler can be reduced by about 1 wt% to about 35 wt%, based upon the total weight of the composition, when compared with a comparative composition that does not contain the fibrous composition. Within this range, the dielectric filler can be reduced by up to about 10 wt%, specifically by up to about 15 wt%, and more specifically by up to about 30 wt%, based upon the total weight of the composition, when compared with a comparative composition that has approximately the same dielectric constant and does not contain the fibrous composition.

The composition generally has a dielectric constant of about 4 to about 25, specifically about 5 to about 30 and more specifically about 6 to about 15 when measured at a frequency of 900 megahertz (MHz).

In another embodiment, the use of a smaller amount of the dielectric filler results in a reduction of the specific gravity of the composition. The specific gravity can be reduced by about 1 to about 30%, specifically about 2 to about 25%, and more specifically about 3 to about 20%, when compared with the specific gravity of a comparative composition that has approximately the same dielectric constant and does not contain the fibrous composition. Specific gravities are tested using ASTM D 792.

In yet another embodiment, the melt viscosity of the composition is reduced by about 1 to about 70%, specifically about 10 to about 60%, and more specifically about 20 to about 50%, over a comparative composition that has approximately the same dielectric constant (when in the solid state) and does not contain the fibrous composition.

In yet another embodiment, the composition has an impact strength that is about 3% to about 60%, specifically about 10 to about 55%, and more specifically about 15 to about 50% greater than the impact strength of a comparative composition that has approximately the same dielectric constant and does not contain the fibrous composition.

The composition has a notched Izod impact strength of about 40 to about 100 Joules per meter □J/m) when measured using ASTM D 256. In one embodiment, the composition generally has a notched Izod impact strength of greater than or equal to about 40□J/m), specifically greater than or equal to about 50 (J/m), and more specifically greater than or equal to about 60 (J/m).

The following examples illustrate compositions and methods of manufacturing of some of the various embodiments described herein.

### EXAMPLES

### Example 1

This example was conducted to demonstrate the effects of addition of the fibrous composition to comparative compositions comprising a thermoplastic polymer and a dielectric filler. The thermoplastic polymer was polyphenylene ether (also known as polyphenylene oxide or PPO) purchased from General Electric Company under the trade name Noryl C2000. The dielectric filler contained two ceramic fillers - barium titanate purchased from Hebei Kingway Chemical Industry Co. Ltd. under the brand name Nanometer Grade and titanium dioxide purchased from Sun Chemical_Co. Ltd. under the brand name K2233. The weight ratio of barium titanate to titanium dioxide was 1.85. The ceramic filler had an average particle size of about 0.5 micrometers. The fibrous composition comprised stainless steel fibers (SSF) purchased from Bekert under the commercial name BEKI-SHIELD GR75/ S 3010-E. The fibers had an average diameter of 11 micrometers.

The thermoplastic polymer along with additives i.e., a thermal stabilizer in an amount of 0.065 wt%, an anti-oxidant in an amount of 0.4 wt%, a flame agent in an amount of 0.065 wt%, and a mold release agent in an amount of 0.65 wt% (all weight percents being based on the total weight of the composition) were added to the feed throat of a twin-screw extruder. The twin screw extruder was a Toshiba 2-lobe twin screw extruder having a screw diameter of 37 millimeter with a length to diameter ratio (L/D ratio) of 40. As indicated in the Table 1, the barrel temperature was set between 50°C to 290°C from throat to die respectively. As can be seen in the Table 1, the extruder had 12 barrels including the feed zone and a die. The barrel temperatures are shown in the Table 1. The screw speed was set at 300 revolutions per minute (rpm), and output was set between 30 to 60 kg/hour. The compound was quenched by cool water and then pelletized and collected. It is to be noted that Table Nos. 1 and 2 depict processing conditions for Examples 1 and 2 respectively. Hence in the Example 2, processing conditions will not be separately described.

For the Example 1, the fibrous composition along with the dielectric filler (having a dielectric constant greater than or equal to about 25) were added to the extruder through a side feeder at the barrel #7.

The extrudate emanating from the extruder was pelletized and was subsequently pre-dried at 100 to 120°C for 2 to 5 hours. The dried pellets were molded on a Nissei ES3000 injection machine. The barrel temperature in the injection molding machine and the mold temperature for the Examples 1 and 2 are shown in the Table 2. Different type and size of bars or plaques were molded according to the following test standards that were used for determining the properties shown in the Tables 3 and 4 respectively.

Specific gravities and notched Izod properties of the injection-molded samples were tested using ASTM D 792 and ASTM D 256 respectively. Melt viscosity ratio (MVR) was measured according to ASTM D1238 at 300°C and under a load of 5.0 kilograms. Each reported value is an average value of five tested specimens. The dielectric constant was measured using an Agilent 4291B impedance analyzer at a frequency of 900 MHz at room temperature.

**Table 1**

| | | Example 1 | Example 2 | |
|---|---|---|---|---|
| Parameters | units | PPO | PA66 | PPO/PA66 |
| Barrel Size | mm | 1500 | 1500 | 1500 |
| Die | mm | 4 | 4 | 4 |
| Feed (Zone 0) Temp | °C | 50 | 50 | 50 |
| Zone 1 Temp | °C | 50 | 100 | 100 |
| Zone 2 Temp | °C | 150 | 160 | 160 |
| Zone 3 Temp | °C | 280 | 250 | 260 |
| Zone 4 Temp | °C | 280 | 260 | 275 |
| Zone 5 Temp | °C | 270 | 260 | 275 |
| Zone 6 Temp | °C | 280 | 260 | 275 |
| Zone 7 Temp | °C | 280 | 260 | 275 |
| Zone 8 Temp | °C | 290 | 260 | 275 |
| Zone 9 Temp | °C | 290 | 260 | 275 |
| Zone 10 Temp | °C | 290 | 260 | 275 |
| Zone 11 Temp | °C | 290 | 260 | 275 |
| Die Temp | °C | 290 | 270 | 280 |
| Screw speed | rpm | 300 | 300 | 300 |
| Throughput | kg/hr | 40 | 40 | 40 |
| Torque | --- | 50 | 50 | 50 |

**Table 2**

| | | Example 1 | Example 2 | |
|---|---|---|---|---|
| Parameters | units | PPO | Nylon66 | PPO/Nylon66 |
| Pre-drying time | Hour | 3 | 8 | 3 |
| Pre-drying temp | °C | 105 | 85 | 105 |
| Hopper temp | °C | | 70 | 50 |
| Zone 1 temp | °C | 280 | 255 | 270 |
| Zone 2 temp | °C | 290 | 265 | 280 |
| Zone 3 temp | °C | 300 | 265 | 280 |
| Nozzle temp | °C | 290 | 270 | 270 |
| Mold temp | °C | 90 | 90 | 90 |
| Screw speed | rpm | 100 | 120 | 100 |
| Back pressure | kgf/cm² | 90 | 80 | 40 |
| Holding time | s | 8 | 10 | 10 |
| Cooling time | s | 15 | 20 | 15 |
| Injection speed | mm/s | 25 | 40 | 65 |
| Holding pressure | kgf/cm² | 600 | 800 | 800 |
| Max. Injection pressure | kgf/cm² | 1000 | 1000 | 1000 |

The results for Example 1 are shown in the Table 3 below, while the results for the Example 2 are shown in the Table 4 below.

**Table 1**

| Dielectric Constant @900 MHz | Ceramic Filler (wt%) | | | MVR (cm³/10 min) | | | Processability | | | Specific Gravity (g/cm³) | | | Impact resistance (J/m) | | |
|---|---|---|---|---|---|---|---|---|---|---|---|---|---|---|---|
| | @0 wt% SSF | @2 wt% SSF | @6 wt% SSF | @0 wt% SSF | @2 wt% SSF | @6 wt% SSF | @0 wt% SSF | @2 wt% SSF | @6 wt% SSF | @0 wt% SSF | @2 wt% SSF | @6 wt% SSF | @0 wt% SSF | @2 wt% SSF | @6 wt% SSF |
| 3.3 | 25 | 20 | 0 | 15∼17 | 16∼20 | 22∼24 | stable | stable | stable | 1.29 | 1.27 | 1.1 | 68 | 70 | 100 |
| 4.1 | 40 | 30 | 18 | 10∼12 | 14∼16 | 16∼18 | stable | stable | stable | 1.38 | 1.37 | 1.31 | 60 | 62 | 85 |
| 6.1 | 60 | 45 | 40 | 5∼8 | 8∼10 | 11∼13 | stable | stable | stable | 1.85 | 1.63 | 1.59 | 42 | 56 | 65 |
| 8.0 | *** | 60 | 50 | | 7∼9 | 7∼9 | | stable | stable | | 1.94 | 1.78 | | 40 | 51 |
| 10.7 | *** | *** | 60 | | | 4∼6 | | | stable | | | 2.00 | | | 44 |

| | | | | | | | | | | | | | | | |
|---|---|---|---|---|---|---|---|---|---|---|---|---|---|---|---|
| *** cannot reach this value of dielectric constant with this composition | | | | | | | | | | | | | | | |

Table 3 shows that in order to maintain a dielectric constant of 3.3, 4.1, or 6.1 (at 900 MHz), the amount of the dielectric filler (ceramic filler) had to be varied from 25 to 40 to 60 wt% respectively, when no fibrous composition was used. When the fibrous composition comprising stainless steel fibers was used in amounts of 2 wt%, the amount of the dielectric filler was reduced to 20, 30 and 45 wt% respectively in order to maintain the dielectric constant at 3.3, 4.1, or 6.1 respectively. When the fibrous composition comprising stainless steel fibers was used in amounts of 6 wt%, the amount of the dielectric filler was reduced to 0, less than 25 wt% and 40 wt% respectively in order to maintain the dielectric constant at 3.3, 4.1, or 6.1 respectively. When 50 and 60 wt% of the dielectric filler are used in conjunction with 6 wt% of the stainless steel fiber, dielectric constants of 8 and 10.7 respectively can be achieved. As can be seen in the Table 3, for this particular example only, a dielectric constant greater than 8 cannot be achieved with 2 wt% stainless steel fiber.

From the Table 3, it can also be seen that the as the amount of the SSF is increased the melt viscosity ratio (MVR) increases, indicating a decrease in the melt viscosity. Thus the addition of the stainless steel fibers to the thermoplastic polymer and the dielectric filler improves processability of the composition. Because the synergy between the dielectric filler and the fibrous composition causes an increase in the dielectric constant, a portion of the dielectric filler can be removed. This results in a reduction in the specific gravity and an increase in the impact strength, both of which are shown in the Table 3.

### Example 2

This example was conducted to demonstrate that the synergy between the dielectric filler and the fibrous composition can be witnessed in other semi-crystalline thermoplastic polymers as well. The synergistic interactions can be witnessed for thermoplastic polymeric blends as well. As can be seen in the Table 2 below, the thermoplastic polymers chosen for this experiment was a polyamide - Nylon 66 (PA66) or a blend comprising the PA66 and PPO. The PA66 was purchased from BASF under the brand name A27E01. The PPO was the same as that used in Example 1. The weight ratio of the PA66 to PPO was 1:1.

The dielectric filler was the same as in Example 1. The fibrous composition comprised stainless steel fibers (SSF) similar to that used in the Example 1.

The extrusion and molding conditions are shown in the Tables 1 and 2 respectively. The compositions and the results are shown in the Table 4 below.Table 4

| Thermoplastic polymer | Dielectric Constant @900 MHz | Ceramic Filler (wt%) | | | Processability | | | Specific Gravity (g/cm³) | | | Impact resistance (J/m) | | |
|---|---|---|---|---|---|---|---|---|---|---|---|---|---|
| | | @0 wt% SSF | @2 wt% SSF | @6 wt% SSF | @0 wt% SSF | @2 wt% SSF | @6 wt% SSF | @0 wt% SSF | @2 wt% SSF | @6 wt% SSF | @0 wt% SSF | @2 wt% SSF | @6 wt% SSF |
| PA66 | 4.1 | 25 | 16 | | stable | stable | | 1.4 | | | 35.2 | | |
| | 4.8 | 40 | 20 | 0 | stable | stable | | 1.62 | 1.41 | | 28.6 | 40 | |
| | 7.2 | --- | --- | 25 | | | stable | | | 1.42 | | | 40 |
| | 8.5 | 60 | 50 | 35 | Few breaks | stable | stable | 2.07 | 1.97 | 1.54 | 25 | 28 | |
| | 11.8 | *** | *** | 50 | | | stable | | | 1.95 | | | 30 |
| | 13.1 | *** | *** | 60 | | | stable | | | 2.07 | | | 30 |
| PPO/PA66 | 3.6 | 25 | | | stable | | | 1.29 | 1.27 | | 113 | | |
| | 4.3 | 40 | 20 | | stable | stable | | 1.5 | | 1.32 | 88 | 89 | |
| | 5.0 | --- | | 25 | | | stable | | 1.56 | 1.39 | | | 105 |
| | 5.4 | 50 | 40 | 30 | stable | stable | stable | 1.74 | | | 66 | 80 | 91 |
| | 6.8 | 60 | | | Few breaks | | | 1.85 | | | 46 | | |
| | 7.1 | *** | 50 | 40 | | stable | stable | | 2.0 | 1.63 | | 65 | 41 |
| | 11.9 | *** | | 60 | | | stable | | | 2.15 | | | 31 |

| | | | | | | | | | | | | | |
|---|---|---|---|---|---|---|---|---|---|---|---|---|---|
| *** cannot reach this value of dielectric constant with this composition | | | | | | | | | | | | | |

From the Table 4, it may also be seen that the addition of the fibrous composition facilitates a reduction in the amount of the dielectric filler, which promotes improved processability of the composition, a reduced specific gravity, and improved impact strength in the composition. With regard to processability, it may be seen that in order to achieve dielectric constants of 6.0 or greater at 900 MHz, the amount of the dielectric filler causes the strands of extrudate emanating from the extruder to break. The addition of the fibrous composition to the composition permits these high dielectric constants to be achieved while producing strands that are stable. This reduces production costs and improves reproducibility.

### Example 3

This example was conducted to demonstrate that the synergistic effect between the dielectric filler and the fibrous composition can be seen with other amorphous polymers as well. As can be seen from the Table 3, the thermoplastic polymer used for these examples was polycarbonate purchased from the General Electric company under the brand name Lexan C017 and a blend of the polycarbonate with acrylonitrile butadiene styrene (ABS). The ABS purchased from the General Electric company under the brand name C29449.

The dielectric filler was the same as in Example 1. The fibrous composition comprised stainless steel fibers (SSF) similar to that used in the Example 1.

The respective thermoplastic polymer, the dielectric filler and the fibrous composition were blended in the same extruder described for the Examples 1 and 2. The extruder and molding machines are same as Examples 1 and 2. The only difference is the temperature setting. The extruder had 12 zones, set at successive temperatures of 50, 50, 100, 200, 255, 255, 255, 255, 255, 255, 255, and 255°C from throat to the last zone prior to the die respectively. The die temperature was set at 260°C. The screw speed was 300 revolutions per minute (rpm).

The extrudate was dried and then injection molded in a Nissei ES3000 molding machine. The barrel temperature in the injection molding machine was set at 255 °C and the mold temperature was set at 80°C. The screw speed was 100 rpm. The samples were tested according to the same protocol described in the Example 1.

The compositions and the results are shown in the Table 5

**Table 5**

| Thermoplastic polymer | Dielectric Constant @ 900 MHz | Ceramic Filler % | |
|---|---|---|---|
| | | @0 wt% SSF | @6 wt% SSF |
| PC | 3.4 | 25 | 0 |
| | 4.6 | 40 | 14 |
| | 5.8 | | 25 |
| | 8.0 | 60 | 40 |
| | 9.9 | 70 | 50 |
| | 10.7 | Cannot reach | 60 |
| PC/ABS | 3.0 | 25 | |
| | 4.6 | 40 | |
| | 5.8 | | 19 |
| | 8.0 | 50 | |
| | 9.9 | | 45 |
| | 10.7 | 70 | 50 |

The results from the Table 5 indicate once again that the addition of the fibrous composition to the dielectric filler improves the dielectric constant of the composition. Thus the synergy between the fibrous composition and the dielectric filler can be seen even when they are blended in with an amorphous thermoplastic polymer.

### Example 4

This example was conducted to demonstrate that an electrically insulating fibrous composition also interacts synergistically with a dielectric filler in a thermoplastic polymer. The result as seen in the Figure is a composition with an enhanced dielectric constant. In this example, the thermoplastic polymer and the dielectric filler were the same as in the Example 1. Zinc oxide (ZnO) whiskers purchased from Advanced Technologies and Crystal-wide Co. Ltd. under the brand name T-ZnOw were added to the thermoplastic polymer and the dielectric filler to form the composition. The ZnO whiskers had an average aspect ratio of 20 and an average diameter of 1.0 micrometers. The extruder and injection molding processing conditions are shown in the Tables 6 and 7 respectively.

**Table 6**

| Compounder Type (TEM-37BS) | Units | Value |
|---|---|---|
| Barrel Size | mm | 1500 |
| Die | mm | 4 |
| Zone 1 Temp | °C | 50 |
| Zone 2 Temp | °C | 150 |
| Zone 3 Temp | °C | 280 |
| Zone 4 Temp | °C | 280 |
| Zone 5 Temp | °C | 270 |
| Zone 6 Temp | °C | 280 |
| Zone 7 Temp | °C | 280 |
| Zone 8 Temp | °C | 290 |
| Zone 9 Temp | °C | 290 |
| Zone 10 Temp | °C | 290 |
| Zone 11 Temp | °C | 290 |
| Die Temp | °C | 290 |
| Screw speed | rpm | 300 |
| Throughput | kg/hr | 60 |
| Torque | NONE | 50 |

**Table 7**

| Operation | Units | Value |
|---|---|---|
| Pre-drying time | Hour | 3 |
| Pre-drying temp | °C | 105 |
| Hopper temp | °C | 50 |
| Zone 1 temp | °C | 280 |
| Zone 2 temp | °C | 250 |
| Zone 3 temp | °C | 300 |
| Nozzle temp | °C | 290 |
| Mold temp | °C | 90 |
| Screw speed | rpm | 100 |
| Back pressure | kgf/cm² | 90 |
| Holding time | s | 10 |
| Cooling time | s | 20 |
| Injection speed(mm/s) | mm/s | 25 |
| Holding pressure | kgf/cm² | 600 |
| Max. Injection pressure | kgf/cm² | 1000 |

Dielectric constants were measured according to the same protocol described in the Example 1. The Figure is a graph showing the improvement in the dielectric constant versus the ceramic filler loading. The Figure shows that when the ZnO fibers were added to the dielectric filler and the thermoplastic polymer, the dielectric constant improved. For example, from the Figure, it may be seen that a dielectric constant of about 6 is produced by a composition containing 60 wt% ceramic filler or by a composition containing 50 wt% ceramic filler and 5 wt% ZnO whiskers. Thus, when the fibrous composition is added to the dielectric filler, the overall filler loading in the thermoplastic polymer is also reduced.

From the aforementioned examples, it may be seen that when a dielectric filler having a dielectric constant of greater than or equal to about 25 is blended with a fibrous composition, the total filler loading (i.e., the sum of the additives incorporated into the thermoplastic polymer) is reduced by up to about 5 wt%, specifically by up to about 10 wt%, and more specifically by up to about 20 wt%, when compared with a comparative composition having the same dielectric constant.

In other words, by incorporating the fibrous composition and the dielectric filler into the thermoplastic polymer, the dielectric constant of the composition is improved by at least 10%, specifically by at least 20%, and more specifically by at least 30%, over a comparative composition comprising only the thermoplastic polymer and the dielectric filler without the fibrous composition.

In summary, a composition comprising a thermoplastic polymer; about 10 to about 60 weight percent of a dielectric filler having a dielectric constant greater than or equal to about 25 when measured at 900 megahertz; the dielectric filler having an average aspect ratio greater than or equal to about 5; and about 1 to about 10 weight percent of a fibrous composition; the weight percent being based on the total weight of the composition, displays advantageous and superior dielectric properties over comparative compositions and can be used to manufacture a variety of articles of commerce.

In another embodiment, a composition comprising a thermoplastic polymer; about 10 to about 60 weight percent of a dielectric filler having a dielectric constant greater than or equal to about 25 when measured at 900 megahertz; the dielectric filler comprising a ceramic filler that comprises barium titanate or titanium dioxide; the dielectric filler having an average aspect ratio greater than or equal to about 5; and about 1 to about 10 weight percent of a fibrous composition; the weight percent being based on the total weight of the composition, displays advantageous and superior dielectric properties over comparative compositions and can be used to manufacture a variety of articles of commerce.

In yet another embodiment, a composition comprising a thermoplastic polymer; about 10 to about 60 weight percent of a dielectric filler having a dielectric constant greater than or equal to about 25 when measured at 900 megahertz; the dielectric filler comprising a ceramic filler that comprises barium titanate or titanium dioxide; the dielectric filler having an average aspect ratio greater than or equal to about 5; and about 1 to about 10 weight percent of a fibrous composition; the fibrous composition comprising metal fibers, metal coated fibers, carbon fibers, or a combination comprising at least one of the foregoing fibers; the weight percent being based on the total weight of the composition, displays advantageous and superior dielectric properties over comparative compositions and can be used to manufacture a variety of articles of commerce.

In yet another embodiment, a composition comprising a thermoplastic polymer; about 10 to about 60 weight percent of a dielectric filler having a dielectric constant greater than or equal to about 25 when measured at 900 megahertz; the dielectric filler comprising a ceramic filler that comprises barium titanate or titanium dioxide; the dielectric filler having an average aspect ratio greater than or equal to about 5; and about 1 to about 10 weight percent of a fibrous composition; the fibrous composition comprising metal fibers, metal coated fibers, carbon fibers, or a combination comprising at least one of the foregoing fibers; the fibrous composition comprising stainless steel fibers or zinc oxide whiskers; the weight percent being based on the total weight of the composition, displays advantageous and superior dielectric properties over comparative compositions and can be used to manufacture a variety of articles of commerce.

In yet another embodiment, a composition comprising a thermoplastic polymer; a dielectric filler; the dielectric filler having an average aspect ratio greater than or equal to about 5; and a fibrous composition; the composition having a dielectric constant of about 4 to about 15 measured at 900 MHz and an impact strength of about 40 to about 100 Joules per meter when tested according to ASTM D 256, displays advantageous and superior dielectric properties over comparative compositions and can be used to manufacture a variety of articles of commerce.

In yet another embodiment, a composition comprising a thermoplastic polymer; a dielectric filler; the dielectric filler having an average aspect ratio greater than or equal to about 5; the dielectric filler comprising a ceramic filler that comprises barium titanate or titanium dioxide; and a fibrous composition; the composition having a dielectric constant of about 4 to about 15 measured at 900 MHz and an impact strength of about 40 to about 100 Joules per meter when tested according to ASTM D 256, displays advantageous and superior dielectric properties over comparative compositions and can be used to manufacture a variety of articles of commerce.

In yet another embodiment, a composition comprising a thermoplastic polymer; a dielectric filler; the dielectric filler having an average aspect ratio greater than or equal to about 5; the dielectric filler comprising a ceramic filler that comprises barium titanate or titanium dioxide; and a fibrous composition; the fibrous composition comprising metal fibers, metal coated fibers, carbon fibers, or a combination comprising at least one of the foregoing fibers; the composition having a dielectric constant of about 4 to about 15 measured at 900 MHz and an impact strength of about 40 to about 100 Joules per meter when tested according to ASTM D 256, displays advantageous and superior dielectric properties over comparative compositions and can be used to manufacture a variety of articles of commerce.

In yet another embodiment, a composition comprising a thermoplastic polymer; a dielectric filler; the dielectric filler having an average aspect ratio greater than or equal to about 5; the dielectric filler comprising a ceramic filler that comprises barium titanate or titanium dioxide; and a fibrous composition; the fibrous composition comprising metal fibers, metal coated fibers, carbon fibers, or a combination comprising at least one of the foregoing fibers; the fibrous composition comprising stainless steel fibers or zinc oxide whiskers; the composition having a dielectric constant of about 4 to about 15 measured at 900 MHz and an impact strength of about 40 to about 100 Joules per meter when tested according to ASTM D 256, displays advantageous and superior dielectric properties over comparative compositions and can be used to manufacture a variety of articles of commerce.

As noted above, the method of manufacturing an article comprises melt blending a composition comprising a thermoplastic polymer; about 10 to about 60 weight percent of a dielectric filler having a dielectric constant greater than or equal to about 25 when measured at 900 megahertz; and about 1 to about 10 weight percent of a fibrous composition, the weight percent being based on the total weight of the composition; the melt blending comprising extruding the composition and/or injection molding the composition.

## Claims

1. A composition comprising:
a thermoplastic polymer;
10 to 60 weight percent of a dielectric filler having a dielectric constant greater than or equal to 25 when measured at 900 megahertz, wherein the dielectric filler comprises a ceramic filler; and
1 to 10 weight percent of a fibrous composition, wherein the fibrous composition comprises metal fibers, metal coated fibers, carbon fibers, or a combination comprising at least one of the foregoing fibers,
the weight percents being based on the total weight of the composition.

2. The composition of Claim 1,
wherein the composition has a dielectric constant of 4 to 15 as measured at 900 MHz at room temperature and an impact strength of 40 to 100 Joules per meter when tested according to ASTM D 256.

3. The composition of Claim 1, wherein the dielectric filler comprises fibers having an average aspect ratio greater than or equal to 5.

4. The composition of Claim 1, wherein the ceramic fillers are metal oxides of alkali metals, alkaline earth metals, transition metals, metalloids or poor metals; calcium oxide, silicon dioxide, cerium oxide, magnesium oxide, titanium oxide, zinc oxide, copper oxide, cerium oxide, niobium oxide, tantalum oxide, yttrium oxide, zirconium oxide, aluminum oxide, CaTiO₃ MgZrSrTiO₆, MgTiO₃, MgAl₂O₄, BaZrO₃, BaSnO₃, BaNb₂O₆, BaTa₂O₆, WO₃, MnO₂, SrZrO₃, SnTiO₄, ZrTiO₄, CaZrO₃, CaSnO₃, CaWO₄, MgTa₂O₆, MgZrO₃, La₂O₃, CaZrO₃, MgSnO₃ MgNb₂O₆, SrNb₂O₆, MgTa₂O₆, Ta₂O₃, Na₂SiO₃, LiAlSiO₄, Li₄SiO₄, BaTiSi₃O₉, Al₂Si₂O₇, ZrSiO₄, KAlSi₃O₈, NaAlSi₃O₈, CaAl₂Si₂O₈, CaMgSi₂O₆ Zn₂SiO₄, LaB₆, CeB₆, SrB₆, CaB₆, TiB₂, ZrB₂, VB₂, TaB₂, CrB, CrB₂, MoB₂, Mo₂B₅, MoB, W₂B₅, silicon carbide, tungsten carbide, tantalum carbide, iron carbide, titanium carbide, silicon nitride, boron nitride, titanium nitride, aluminum nitride, molybdenum nitride, BaTiO₃, SrTiO₃, barium strontium titanate, strontium-doped lanthanum manganate, LaAlO₃, CaCu₃Ti₄O₁₂, CdCu₃Ti₄O₁₂, Ca₁₋ₓLaₓMnO₃, (Li, Ti) doped NiO, lanthanum strontium copper oxides (LSCO), YBa₂Cu₃O₇, lead zirconate titanate, lanthanum-modified lead zirconate titanate, or a combination comprising at least one of the foregoing ceramic fillers.

5. The composition of any one of Claims 1 or 4, wherein the dielectric filler comprises barium titanate and titanium dioxide.

6. The composition of Claim 1, wherein the fibrous composition comprises stainless steel fibers or zinc oxide whiskers.

7. An article that comprises the compositions of any one of Claims 1 through 6.

8. A method comprising:
melt blending a composition comprising:
a thermoplastic polymer;
10 to 60 weight percent of a dielectric filler having a dielectric constant greater than or equal to 25 when measured at 900 megahertz, wherein the dielectric filler comprises a ceramic filler; and
1 to 10 weight percent of a fibrous composition, wherein the fibrous composition comprises metal fibers, metal coated fibers, carbon fibers, or a combination comprising at least one of the foregoing fibers,
the weight percent being based on the total weight of the composition.

9. The method of Claim 8, further comprising extruding the composition.

10. The method of any one of Claims 8 or 9, further comprising injection molding the composition.

11. An article manufactured by the method of any one of Claims 8, 9 or 10.

## Patentansprüche

1. Eine Zusammensetzung, die folgendes umfasst:
ein thermoplastisches Polymer;
10 bis 60 Gewichtsprozent eines dielektrischen Füllstoffs mit einer Dielektrizitätszahl von größer als oder gleich 25, wenn gemessen bei 900 Megahertz, worin der dielektrische Füllstoff einen keramischen Füllstoff umfasst; und
1 bis 10 Gewichtsprozent einer faserigen Zusammensetzung, worin die faserige Zusammensetzung Metallfasern, metallbeschichtete Fasern, Kohlefasern, oder eine Kombination umfassend mindestens eine der zuvor genannten Fasern umfasst,
wobei die Gewichtsprozentsätze auf dem Gesamtgewicht der Zusammensetzung basieren.

2. Die Zusammensetzung gemäß Anspruch 1,
worin die Zusammensetzung eine Dielektrizitätszahl von 4 bis 15, wie gemessen bei 900 MHz bei Raumtemperatur, und eine Schlagfestigkeit von 40 bis 100 Joules pro Meter, wenn getestet gemäß ASTM D 256, hat.

3. Die Zusammensetzung gemäß Anspruch 1, worin der dielektrische Füllstoff Fasern mit einem durchschnittlichem Formfaktor von größer als oder gleich 5 umfasst.

4. Die Zusammensetzung gemäß Anspruch 1, worin die keramischen Füllstoffe Metalloxide von Alkalimetallen, Erdalkalimetallen, Übergangsmetallen, Metalloiden oder niederen Metallen; Kalziumoxid, Siliziumdioxid, Ceroxid, Magnesiumoxid, Titanoxid, Zinkoxid, Kupferoxid, Ceroxid, Nioboxid, Tantaloxid, Yttriumoxid, Zirkonoxid, Aluminiumoxid, CaTiO₃ MgZrSrTiO₆, MgTiO₃, MgAl₂O₄, BaZrO₃,
**BaSnO₃, BaNb₂O₆, BaTa₂O₆, WO₃, MnO₂, SrZrO₃, SnTiO₄, ZrTiO₄, CaZrO₃, CaSnO₃, CaWO₄, MgTa₂O₆, MgZrO₃, La₂O₃, CaZrO₃, MgSnO₃ MgNb₂O₆, SrNb₂O₆, MgTa₂O₆, Ta₂O₃, Na₂SiO₃, LiAlSiO₄, Li₄SiO₄, BaTiSi₃O₉, Al₂Si₂O₇, ZrSiO₄, KAlSi₃O₈, NaAlSi₃O₈, CaAl₂Si₂O₈, CaMgSi₂O₆, Zn₂SiO₄, LaB₆, CeB₆, SrB₆, CaB₆, TiB₂, ZrB₂, VB₂, TaB₂, CrB,**
CrB₂, MoB₂, Mo₂B₅, MoB, W₂B₅, Siliziumcarbid, Wolframcarbid, Tantalcarbid, Eisencarbid, Titancarbid, Siliziumnitrid, Bornitrid, Titannitrid, Aluminiumnitrid, Molybdännitrid, BaTiO₃, SrTiO₃, Bariumstrontiumtitanat, Strontium-angereichertes Lanthanmanganat, LaAlO₃, CaCu₃Ti₄O₁₂, CdCu₃Ti₄O₁₂, Ca₁₋ₓLaₓMnO₃, (Li, Ti) angereichertes NiO, Lanthanstrontiumkupferoxide (LSCO), YBa₂Cu₃O₇, BleiZirkonattitanat, Lanthan-modifiziertes Bleizirkonattitanat, oder eine Kombination umfassend mindestens einen der zuvor genannten keramischen Füllstoffe, sind.

5. Die Zusammensetzung gemäß irgendeinem der Ansprüche 1 oder 4, worin der dielektrische Füllstoff Bariumtitanat und Titandioxid umfasst.

6. Die Zusammensetzung gemäß Anspruch 1, worin die faserige Zusammensetzung rostfreie Stahlfasern oder Zinkoxid Whisker umfasst.

7. Ein Artikel, der die Zusammensetzungen gemäß irgendeinem der Ansprüche 1 bis 6 umfasst.

8. Ein Verfahren, das folgendes umfasst:
Schmelzmischen einer Zusammensetzung umfassend:
ein thermoplastisches Polymer;
10 bis 60 Gewichtsprozent eines dielektrischen Füllstoffs mit einer Dielektrizitätszahl von größer als oder gleich 25, wenn gemessen bei 900 Megahertz, worin der dielektrische Füllstoff einen keramischen Füllstoff umfasst; und
1 bis 10 Gewichtsprozent einer faserigen Zusammensetzung, worin die faserige Zusammensetzung Metallfasern, metallbeschichtete Fasern, Kohlefasern, oder eine Kombination umfassend mindestens eine der zuvor genannten Fasern umfasst,
wobei die Gewichtsprozent auf dem Gesamtgewicht der Zusammensetzung basieren.

9. Das Verfahren gemäß Anspruch 8, weiter umfassend das Extrudieren der Zusammensetzung.

10. Das Verfahren gemäß irgendeinem der Ansprüche 8 oder 9, weiter umfassend das Spritzgießen der Zusammensetzung.

11. Ein Artikel hergestellt durch das Verfahren gemäß irgendeinem der Ansprüche 8, 9 oder 10.

## Revendications

1. Composition comprenant :
un polymère thermoplastique ;
10 à 60 % en poids d'une charge diélectrique ayant une constante diélectrique supérieure ou égale à 25 quand elle est mesurée à 900 mégahertz, laquelle charge diélectrique comprend une charge céramique ; et
1 à 10 % en poids d'une composition fibreuse, laquelle composition fibreuse comprend des fibres métalliques, des fibres revêtues de métal, des fibres de carbone, ou une combinaison comprenant au moins l'une des fibres précédentes,
les pourcentages en poids étant basés sur le poids total de la composition.

2. Composition selon la revendication 1,
laquelle composition a une constante diélectrique de 4 à 15, telle que mesurée à 900 MHz à la température ambiante, et une résistance au choc de 40 à 100 joules par mètre quand elle est testée conformément à la norme ASTM D 256.

3. Composition selon la revendication 1, dans laquelle la charge diélectrique comprend des fibres ayant un rapport d'aspect moyen supérieur ou égal à 5.

4. Composition selon la revendication 1, dans laquelle les fibres céramiques sont des oxydes métalliques de métaux alcalins, de métaux alcalino-terreux, de métaux de transition, de métalloïdes ou de métaux de post-transition ; l'oxyde de calcium, le dioxyde de silicium, l'oxyde de cérium, l'oxyde de magnésium, l'oxyde de titane, l'oxyde de zinc, l'oxyde de cuivre, l'oxyde de cérium, l'oxyde de niobium, l'oxyde de tantale, l'oxyde d'yttrium, l'oxyde de zirconium, l'oxyde d'aluminium, CaTiO₃ MgZrSrTiO₆, MgTiO₃, MgAl₂O₄, BaZrO₃, BaSnO₃, BaNb₂O₆, BaTa₂O₆, WO₃, MnO₂, SrZrO₃, SnTiO₄, ZrTiO₄, CaZrO₃, CaSnO₃, CaWO₄, MgTa₂O₆, MgZrO₃, La₂O₃, CaZrO₃, MgSnO₃ MgNb₂O₆, SrNb₂O₆, MgTa₂O₆, Ta₂O₃, Na₂SiO₃, LiAlSiO₄, Li₄SiO₄, BaTiSi₃O₉, Al₂Si₂O₇, ZrSiO₄, KAlSi₃O₈, NaAlSi₃O₈, CaAl₂Si₂O₈, CaMgSi₂O₆, Zn₂SiO₄, LaB₆, CeB₆, SrB₆, CaB₆, TiB₂, ZrB₂, VB₂, TaB₂, CrB, CrB₂, MoB₂, Mo₂B₅, MoB, W₂B₅, le carbure de silicium, le carbure de tungstène, le carbure de tantale, le carbure de fer, le carbure de titane, le nitrure de silicium, le nitrure de bore, le nitrure de titane, le nitrure d'aluminium, le nitrure de molybdène, BaTiO₃, SrTiO₃, le titanate de baryum et de strontium, le manganate de lanthane dopé au strontium, LaAlO₃, CaCu₃Ti₄O₁₂, CdCu₃Ti₄O₁₂, Ca₁₋ₓLaₓMnO₃, NiO dopé au (Li, Ti), les oxydes de lanthane, strontium et cuivre (LSCO), YBa₂Cu₃O₇, le zircono-titanate de plomb, le zircono-titanate de plomb modifié par du lanthane, ou une combinaison comprenant au moins l'une des charges céramiques précédentes.

5. Composition selon l'une quelconque des revendications 1 à 4, dans laquelle la charge diélectrique comprend du titanate de baryum et du dioxyde de titane.

6. Composition selon la revendication 1, dans laquelle la composition fibreuse comprend des fibres d'acier inoxydable ou des barbes d'oxyde de zinc.

7. Article qui comprend les compositions de l'une quelconque des revendications 1 à 6.

8. Procédé comprenant :
le mélange à l'état fondu d'une composition comprenant :
un polymère thermoplastique ;
10 à 60 % en poids d'une charge diélectrique ayant une constante diélectrique supérieure ou égale à 25 quand elle est mesurée à 900 mégahertz, laquelle charge diélectrique comprend une charge céramique ; et
1 à 10 % en poids d'une composition fibreuse, laquelle composition fibreuse comprend des fibres métalliques, des fibres revêtues de métal, des fibres de carbone, ou une combinaison comprenant au moins l'une des fibres précédentes,
les pourcentages en poids étant basés sur le poids total de la composition.

9. Procédé selon la revendication 8, comprenant en outre l'extrusion de la composition.

10. Procédé selon l'une quelconque des revendications 8 et 9, comprenant en outre le moulage par injection de la composition.

11. Article manufacturé par le procédé de l'une quelconque des revendications 8, 9 et 10.
